Europäisches Patentamt

European Patent Office

Office européen des brevets

(11) Veröffentlichungsnummer: **0 446 483 A2**

(12) # EUROPÄISCHE PATENTANMELDUNG

(21) Anmeldenummer: 90125393.0

(51) Int. Cl.5: **G01N 27/16**

(22) Anmeldetag: **23.12.90**

(30) Priorität: **14.03.90 DE 4008150**

(43) Veröffentlichungstag der Anmeldung:
**18.09.91 Patentblatt 91/38**

(84) Benannte Vertragsstaaten:
**DE FR GB IT**

(71) Anmelder: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **Drost, Stephan, Dipl.-Ing.**
**Haidelweg 24**
**W-8000 München 60(DE)**

Erfinder: **Endres, Hans-Erik, Dipl.-Phys.**
**Stiftsbogen 148**
**W-8000 München 70(DE)**
Erfinder: **Kühl, Karl, Dipl.-Ing.**
**Bronner Weg 4**
**W-8910 Landsberg(DE)**
Erfinder: **Lang, Walter, Dr.**
**Schmied Kochel Strasse 22/III**
**W-8000 München(DE)**
Erfinder: **Richter, Axel, Dipl.-Ing.**
**Haldenbergerstrassse 28**
**W-8000 München 50(DE)**

(74) Vertreter: **Schoppe, Fritz, Dipl.-Ing. et al**
**Seitnerstrasse 42**
**W-8023 Pullach bei München(DE)**

(54) **Katalytischer Gassensor.**

(57) Ein katalytischer Gassensor (1) hat eine Heizvorrichtung (6, 6a, 6b), eine Temperatursensorvorrichtung (7; 18, 19) und eine katalytisch aktive Oberflächenschicht (13, 14; 13a, 13b), an der das zu erfassende Gas exotherm katalytisch reagiert und zu einer von der Gaskonzentration abhängigen Temperaturerhöhung führt, die durch die Temperatursensorvorrichtung elektrisch erfaßbar ist.

Eine vereinfachte Struktur bei Detektierbarkeit von mehreren Gasarten wird dadurch erreicht, daß der Gassensor (1) einen ersten und einen zweiten Erfassungsbereich (13, 14; 13a, 13b) mit einer ersten bzw. zweiten Empfindlichkeit hat, daß die Temperatursensorvorrichtung (7; 18, 19) sowohl auf dem ersten wie auch auf dem zweiten Erfassungsbereich angeordnet ist, und daß der erste und zweite Erfassungsbereich durch Oberflächenschichten (13, 14) gebildet sind, die ein erstes bzw. zweites Katalysatormaterial aufweisen oder daß der erste und zweite, jeweils eine katalytisch aktive Oberflächenschicht aufweisende Erfassungsbereich (20, 21) durch die Heizvorrichtung (6; 6a, 6b) auf unterschiedliche Temperaturen aufgeheizt werden.

FIG. 2

EP 0 446 483 A2

Die vorliegende Erfindung betrifft einen katalytischen Gassensor mit einer Heizvorrichtung, einer Temperatursensorvorrichtung und einer katalytisch aktiven Oberflächenschicht, an der das zu erfassende Gas exotherm katalytisch reagiert und zu einer von der Gaskonzentration abhängigen Temperaturerhöhung führt, die durch die Temperatursensorvorrichtung elektrisch erfaßbar ist, gemäß dem Oberbegriff des Patentanspruchs 1.

Ein katalytischer Gassensor der eingangs genannten Art ist aus der DE-A1-35 19 397 bekannt. Der bekannte Gassensor umfaßt für jedes zu detektierende Gasgemisch jeweils zwei Detektorelemente, von denen lediglich eines eine katalytisch aktive Oberflächenschicht hat und gegenüber dem zu detektierenden Gasgemisch empfindlich ist, während das andere als Referenzelement keine kalorimetrische Empfindlichkeit hat. Für jede zu erfassende Gasart benötigt der bekannt Gassensor somit ein empfindliches Detektorelement und ein Referenzelement, wodurch sich eine aufwendige Gassensorstruktur ergibt.

Weitere gattungsgemäße katalytische Gassensoren, die nach dem Kalorimeterprinzip arbeiten, sind zur Gasanalyse seit einiger Zeit bekannt, wie beispielsweise die EP-A2-03 21 785, die DE-A1-37 43 398 und die DE-A1-37 43 399 zeigen. Aus den genannten Schriften ist es gleichfalls bekannt, derartige Gassensoren in Halbleitertechnologie zu fertigen. Um den Leistungsbedarf derartiger Sensoren, die auch als Pellistoren bezeichnet werden, zu senken, werden derartige katalytische Gassensoren in Halbleitertechnologie in jüngerer Zeit in Form eines von einer Membran überspannten, einer Ausnehmung aufweisenden Halbleitersubstrates gebildet, wobei die Membran sowohl die Heizvorrichtung als auch die Temperatursensorvorrichtung aufnimmt.

Eine derartige Struktur ist in der älteren, nicht vorveröffentlichten Anmeldung DE-A1-39 23 880 der Anmelderin beschrieben. Zwar ist mittels derartiger bekannter Gassensoren eine Messung der Gaskonzentration dann mit hinreichender Genauigkeit möglich, wenn die Art des in seiner Konzentration zu bestimmenden Gases genau bekannt ist. Eine Erkennung verschiedener Gasarten und deren Konzentrationen ist mit dem bekannten Gassensor nicht möglich.

Gegenüber diesem Stand der Technik liegt der vorliegenden Erfindung die Aufgabe zugrunde, einen katalytischen Gassensor der eingangs genannten Art so weiterzubilden, daß dieser zur Erkennung verschiedener Gasarten und zum Bestimmen der jeweiligen Gaskonzentration bei vereinfachter Bauweise geeignet ist.

Diese Aufgabe wird bei einem katalytischen Gassensor nach dem Oberbegriff des Patentanspruchs 1 durch die im kennzeichnenden Teil des Patentanspruchs 1 angegebenen Merkmale gelöst.

Mit dem erfindungsgemäßen Gassensor ist es möglich, mittels zweier Erfassungsbereiche mit unterschiedlichen Empfindlichkeiten und mittels einer Temperatursensorvorrichtung, die sowohl auf dem Erfassungsbereich mit der ersten Empfindlichkeit wie auch auf dem Erfassungsbereich mit der zweiten Empfindlichkeit angeordnet ist, verschiedene Gasarten zu erkennen, wofür keine Referenzelement benötigt werden.

Die Erfassungsbereiche unterschiedlicher Empfindlichkeiten können durch Oberflächenschichten aus unterschiedlichen Katalysatormaterialien und/oder durch auf unterschiedliche Temperaturen aufgeheizte Bereiche gebildet sein.

Der Erfindung liegt die Erkenntnis zugrunde, daß diese Bereiche unterschiedlicher Empfindlichkeiten eine Erkennung verschiedener Gasarten und eine verbesserte Messung der Gaskonzentration erlauben, da die Temperaturabhängigkeit der chemischen Umsetzung verschiedener Gase von Gasart zu Gasart unterschiedlich ist und da verschiedene Katalysatoren ebenfalls die Reaktionen in einer von der Gasart abhängigen Weise unterschiedlich beeinflussen. Aus diesem Grunde läßt sich durch eine dem Sensor nachgeschaltete Signalverarbeitungsanordnung eine verbesserte Erkennung der Gasart und Gaskonzentration erzielen.

Da der erfindungsgemäße Gassensor mit zwei Meßstellen unterschiedlicher Empfindlichkeit arbeitet, kann der Einfluß von Störgrößen, wie beispielsweise der Strömungsgeschwindigkeit und der Temperatur des zu untersuchenden Gases, weitgehend kompensierbar ist.

Im Gegensatz zu Gassensorstrukturen nach dem Stand der Technik, bei denen Referenzelemente einen gesonderten Herstellungsschritt erfordern, ermöglicht der erfindungsgemäße Gassensor eine Referenzbildung bei integrierter Struktur ohne das Erfordernis zusätzlicher Herstellungsschritte verglichen mit den Herstellungsverfahren, die für die eingangs erwähnten, bekannten Gassensoren erforderlich sind.

Nachfolgend werden unter Bezugnahme auf die beiliegenden Zeichnungen bevorzugte Ausführungsformen des erfindungsgemäßen katalytischen Gassensors näher erläutert. Es zeigen:

Fig. 1       eine Vertikalschnittdarstellung durch eine erste Ausführungsform des erfindungsgemäßen Gassensors;

Fig. 2       eine Draufsicht auf die erste Ausführungsform des erfindungsgemäßen Gassensors gemäß Fig. 1;

Fig. 3 bis 9       eine zweite bis achte Ausführungsform des erfindungsgemäßen Gassensors in Draufsicht;

und

Fig. 10 eine neunte Ausführungsform des erfindungsgemäßen Gassensors in Vertikalschnittdarstellung.

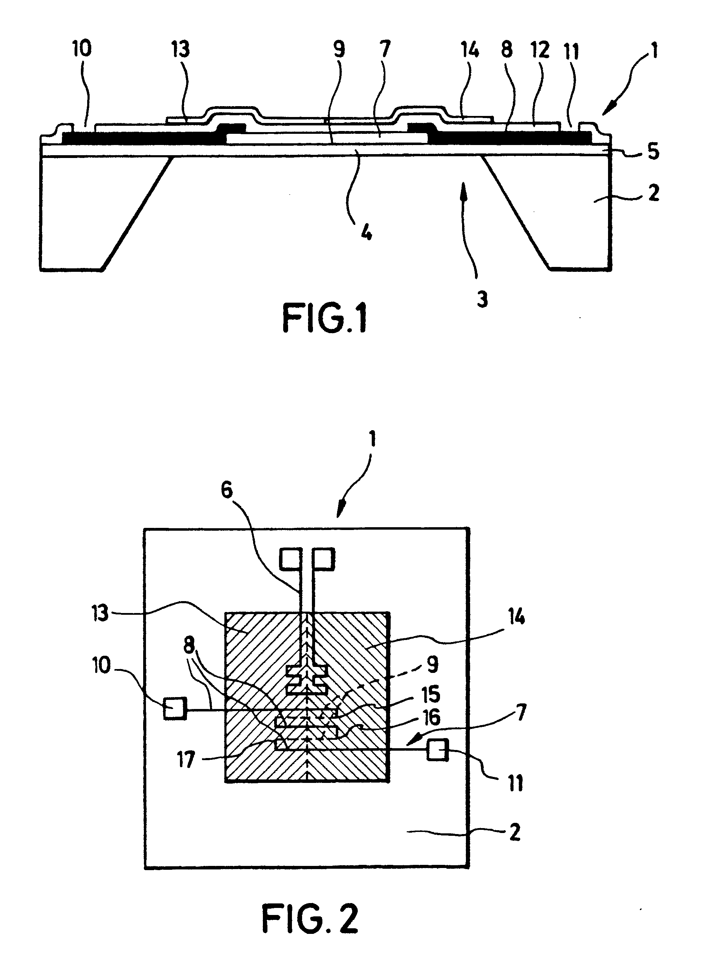

Der in Fig. 1 in Vertikalschnittdarstellung gezeigte katalytische Gassensor ist in seiner Gesamtheit mit dem Bezugszeichen 1 bezeichnet und umfaßt im wesentlichen einen aus Silizium bestehenden Trägerkörper 2, welcher eine Ausnehmung 3 aufweist, die von einer Membran 4 überspannt wird. Die Membran 4 besteht im wesentlichen aus einer Nitridschicht 5, auf der, wie auch aus Fig. 2 ersichtlich ist, ein mäanderförmiger Heizwiderstand 6 aus Polysilizium mit Kontaktstellen aus Aluminium und ein Thermoelement 7 angeordnet sind. Das Thermoelement 7 besteht aus zwei verschiedenen Arten von in Reihe miteinander geschalteten Thermoelementteilstücken 8, 9, die aus unterschiedlichen Materialien bestehen. Bei dem gezeigten, bevorzugten Ausführungsbeispiel bestehen die ersten Thermoelementteilstücke 8 aus einer Aluminiumschicht, die sich von Kontaktlöchern 10, 11 ausgehend bis zu den aus Polysilizium bestehenden zweiten Thermoelementteilstücken 9 erstreckt.

Die Thermoelementteilstücke 8, 9 können auch aus anderen Materialpaarungen bestehen, wie beispielsweise Chrom und Aluminium sowie Polysilizium und Gold.

Oberhalb der soeben beschriebenen Strukturen des Heizwiderstandes 6 und des Thermoelementes 7 liegt eine Passivierungsschicht 12, die durch eine Plasmanitridschicht gebildet sein kann. Oberhalb der Passivierungsschicht liegen, wie in Fig. 2 durch gegenläufige Schraffuren angedeutet ist, eine erste und zweite Oberflächenschicht aus einem ersten und einem zweiten Katalysatormaterial. Als Katalysatormaterialien kommen Metalle wie Platin und Palladium oder Oxide in Betracht. Bei der in Fig. 2 gezeigten bevorzugten Ausführungsform bestehen die erste und zweite Oberflächenschicht 13, 14 aus Platin und Palladium.

Somit ist die Membran 4 teilweise durch die erste Oberflächenschicht 13 aus dem ersten Katalysatormaterial und teilweise durch die zweite Oberflächenschicht 14 aus dem zweiten Katalysatormaterial bedeckt.

Wie insbesondere aus Fig. 2 ersichtlich ist, erstreckt sich das die Temperatursensorvorrichtung bildende Thermoelement 8 über die erste Oberflächenschicht 13 aus dem ersten Katalysatormaterial zu der zweiten Oberflächenschicht 14 aus dem zweiten Katalysatormaterial. Die Kontaktstellen 15, 16, 17 der Thermoelementteilstücke 8, 9 liegen jeweils alternierend auf der ersten bzw. zweiten Oberflächenschicht 13, 14, so daß durch das Thermoelement 7 die Temperaturdifferenz zwischen der ersten und zweiten Oberflächenschicht 13, 14 erfaßt wird.

Bevor abweichende Ausführungsformen beschrieben werden, wird zunächst das Herstellungsverfahren des in den Fig. 1 und 2 gezeigten Gassensors 1 erläutert. Als Ausgangsmaterial für den Trägerkörper 2 dient ein Siliziumwafer, der eine 100-Orientierung hat. Der Siliziumwafer, der später den Trägerkörper 2 bildet, wird thermisch oxidiert und anschließend beidseitig mit einer Nitridschicht von beispielsweise 300 nm Dicke versehen. Hierzu kann ein chemisches Abscheiden aus der Gasphase bei niedrigen Drücken (LPCVD) dienen. Auf die Nitridschicht 5 wird durch einen weiteren LPCVD-Prozeß eine beispielsweise 400 nm dicke Polysiliziumschicht abgeschieden, die durch Photolithographie und naßchemisches Ätzen strukturiert wird. Dabei wird die Polysiliziumschicht auf der Rückseite des Siliziumwafers entfernt. Diese Polysiliziumschicht dient als Material für den Heizwiderstand 6 sowie für das zweite Thermoelementteilstück 9. Die Leiterbahnbreite des Heizelementes 6 und Thermoelementes 7 liegt typischerweise zwischen 0,01 und 0,03 mm. Durch Aufdampfen oder Aufsputtern auf die Vorderseite des Siliziumwafers wird eine Aluminiumschicht abgeschieden, die die ersten Thermoelementteilstücke 8 und die Kontaktstellen des Heizwiderstandes darstellt. Für die Herstellung des Heizwiderstandes 6 oder der später zu erläuternden Meßwiderstände kann auch Nickel verwendet werden. Zum Erzeugen von Kontakten wird in diesem Fall Gold aufgesputtert oder aufgedampft. Die Strukturierung der gewünschten Konfigurationen erfolgt wiederum durch Photolithographie und eine geeignete Ätztechnik.

Die Passivierungsschicht 12 wird durch ein Plasma-unterstütztes chemisches Abscheidungsverfahren aus der Gasphase (PECVD) hergestellt. Die durch das PECVD-Verfahren abgeschiedene Plasmanitridschicht hat eine Dicke von 300 bis 700 nm. Im Bereich der Kontaktlöcher 10, 11 wird die Passivierungsschicht 12 durch Phototechnik und Trockenätzen geöffnet. Die Nitridschicht (nicht dargestellt) auf der Waferrückseite wird durch Trockenätzen zu einer Ätzmaske strukturiert. Durch anisotropes Ätzen wird die Ausnehmung 3 zur Definition einer rechteckigen Membran mit Abmessungen von 0,3 x 0,3 bis 3 x 3 mm freigelegt. Dies kann mittels einer KOH-Lösung geschehen. Bei Verwenden einer isotrop wirkenden Ätze, wie beispielsweise $HF/HNO_3$ kann eine kreisrunde oder andere Membranform hergestellt werden.

Anschließend wird durch Verwenden einer Schattenmaske auf der Vorderseite oder, wie später erläutert wird, auch auf der Rückseite, das Aufdampfen der Katalysatormaterialien zum Erzeugen der Oberflächenschichten 13, 14 vorgenommen. Das Aufbringen der Katalysatormaterialien kann auch mittels Sputtern geschehen.

Wie bereits erwähnt, kommen als Katalysatormaterialien hierfür Metalle wie Platin und Palladium oder Oxide in Betracht.

Bei Verwendung verschiedener Schattenmasken können auf verschiedene Flächen unterschiedliche Katalysatormaterialien aufgebracht werden. Bereits hier sei angemerkt, daß in Abweichung zu dem gezeigten Ausführungsbeispiel auch mehr als zwei Katalysatormaterialien auf verschiedenen Teilflächen der Membran 4 abgeschieden werden können, wobei zum Messen der entsprechenden Temperaturunterschiede weitere thermische Sensoren erforderlich sind.

Nach dem Sägen des Siliziumwafers werden die so entstandenen Chips auf geeignete Sockel aufgebracht (nicht dargestellt). In Abweichung zu der genannten Herstellungsreihenfolge kann das Aufbringen der Katalysatormaterialien zum Erzeugen der Oberflächenschichten 13, 14 auch nach dem Sägen erfolgen.

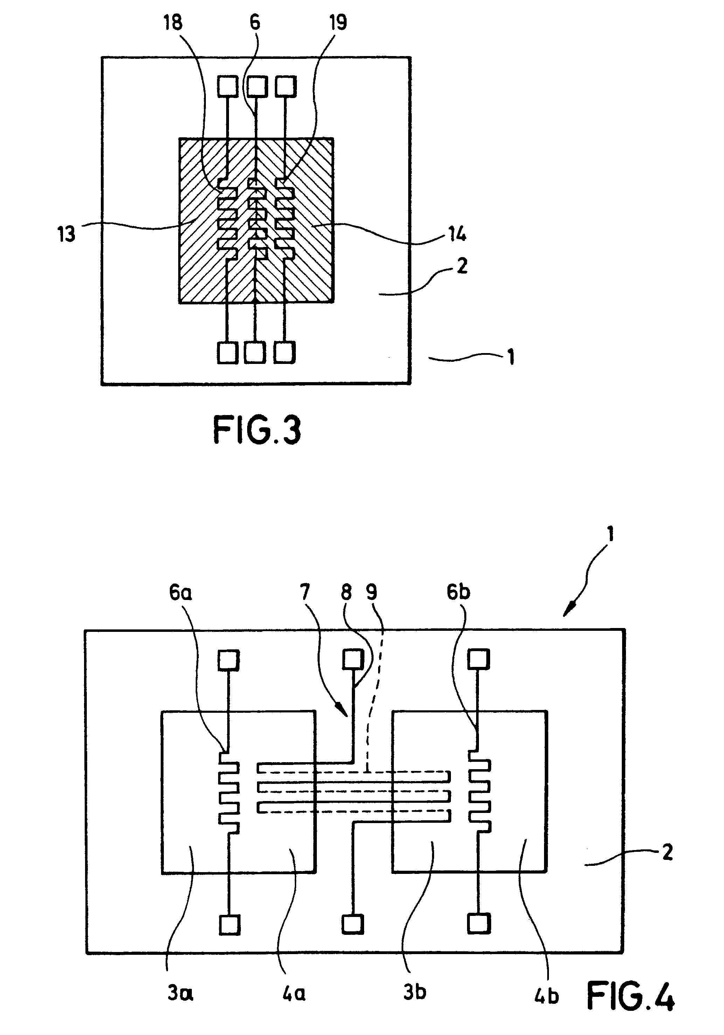

Die nachfolgend unter Bezugnahme auf die Fig. 3 bis 10 erläuterten abweichenden Ausführungsbeispiele stimmen im wesentlichen bezüglich ihrer Struktur und ihres Herstellungsverfahrens mit dem unter Bezugnahme auf die Fig. 1 und 2 erläuterten ersten Ausführungsbeispiel überein, so daß zum Vermeiden von Wiederholungen gleiche oder ähnliche Teile mit übereinstimmenden Bezugszeichen bezeichnet werden. Die nachfolgende Erläuterung beschränkt sich daher auf die Abweichungen der weiteren Ausführungsbeispiele gegenüber dem Ausführungsbeispiel nach den Fig. 1 und 2.

Bei dem zweiten Ausführungsbeispiel gemäß Fig. 3 ist der Heizwiderstand 6 in gestreckter, nicht abgewinkelter Form ausgeführt und liegt mit seiner Mäanderform symmetrisch zur Grenzlinie zwischen den beiden Oberflächenschichten 13, 14.

Anstelle des Thermoelementes 7 sind zwei Meßwiderstände 18, 19 vorgesehen, die jeweils zum Erfassen der Temperatur der ersten bzw. zweiten Oberflächenschicht 13, 14 dienen.

Bei der dritten Ausführungsform gemäß Fig. 4 weist der Trägerkörper 2 zwei Ausnehmungen 3a, 3b auf, die jeweils von einer Membran 4a, 4b überspannt werden. Jede Membran ist mit einem eigenen Heizwiderstand 6a, 6b versehen. Das Thermoelement 7 mit den ersten und zweiten Thermoelementteilstücken 8, 9 ist derart angeordnet, daß deren Kontaktstellen alternierend auf der ersten bzw. zweiten Membran 4a, 4b zum Messen der unterschiedlichen Membrantemperaturen angeordnet sind. Auch hier erfaßt also das Thermoelement 7 die Temperaturdifferenz zwischen den beiden Membranen 4a, 4b, die bei dem hier gezeigten Ausführungsbeispiel ganzflächig mit einem ersten oder zweiten Katalysatormaterial überzogen sind.

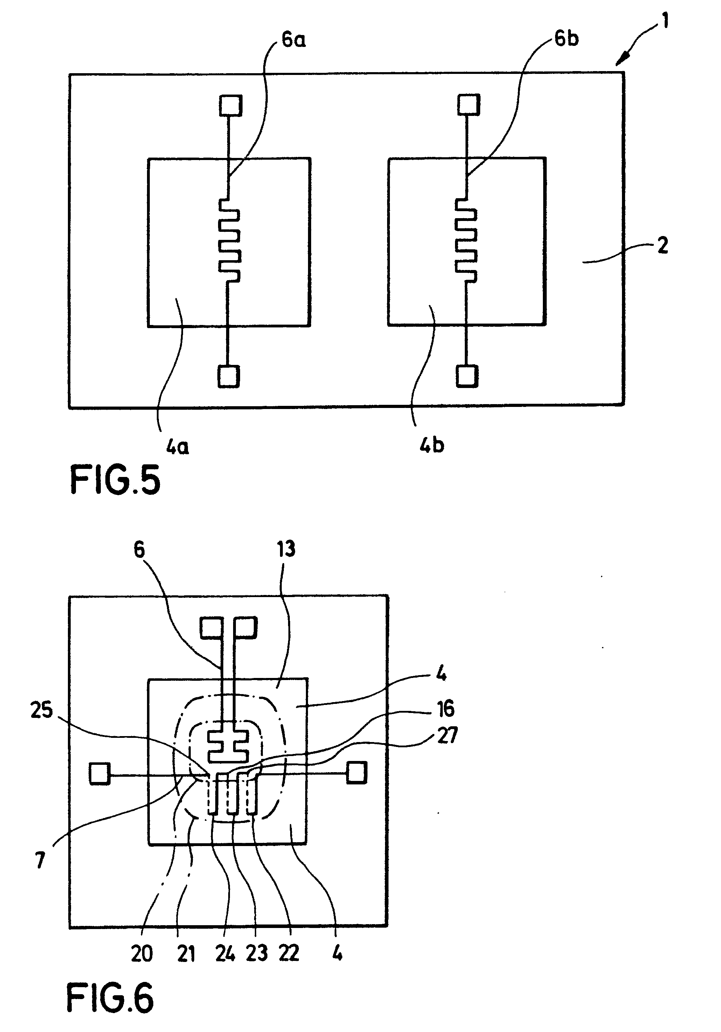

Die in Fig. 5 gezeigte vierte Ausführungsform des erfindungsgemäßen Gassensors 1 weicht von der dritten Ausführungsform gemäß Fig. 4 dadurch ab, daß die beiden Widerstände 6a, 6b sowohl als Heizwiderstände wie auch als Meßwiderstände dienen. Aus diesem Grunde kann bei dieser Ausführungsform das Thermoelement 7 zum Erfassen der Temperatur der Membranen 4a, 4b entfallen.

Bei der fünften Ausführungsform gemäß Fig. 6 ist die Membran 4 nur mit einer einheitlichen Oberflächenschicht 13 aus einem einzigen Katalysatormaterial überzogen. Bei dieser fünften Ausführungsform werden Erfassungsbereiche unterschiedlicher Empfindlichkeiten nicht durch Verwendung unterschiedlicher Katalysatormaterialien im Bereich der Meßpunkte des Thermoelementes 7 verwirklicht, sondern durch Aufheizen der Erfassungsbereiche auf unterschiedliche Temperaturniveaus. Wie dies in Fig. 6 durch strichpunktierte Linien angedeutet ist, sind bei diesem Ausführungsbeispiel die Erfassungsbereiche durch Isothermen 20, 21 am Ort der jeweiligen Kontaktstellen 22, 23, 24 bzw. 25, 26, 27 verwirklicht. Diese Isothermen 20, 21 werden bei dem Ausführungsbeispiel gemäß Fig. 6 durch Bereiche von unterschiedlicher Entfernung zu dem Heizwiderstand 6 innerhalb der Membran 4 gebildet.

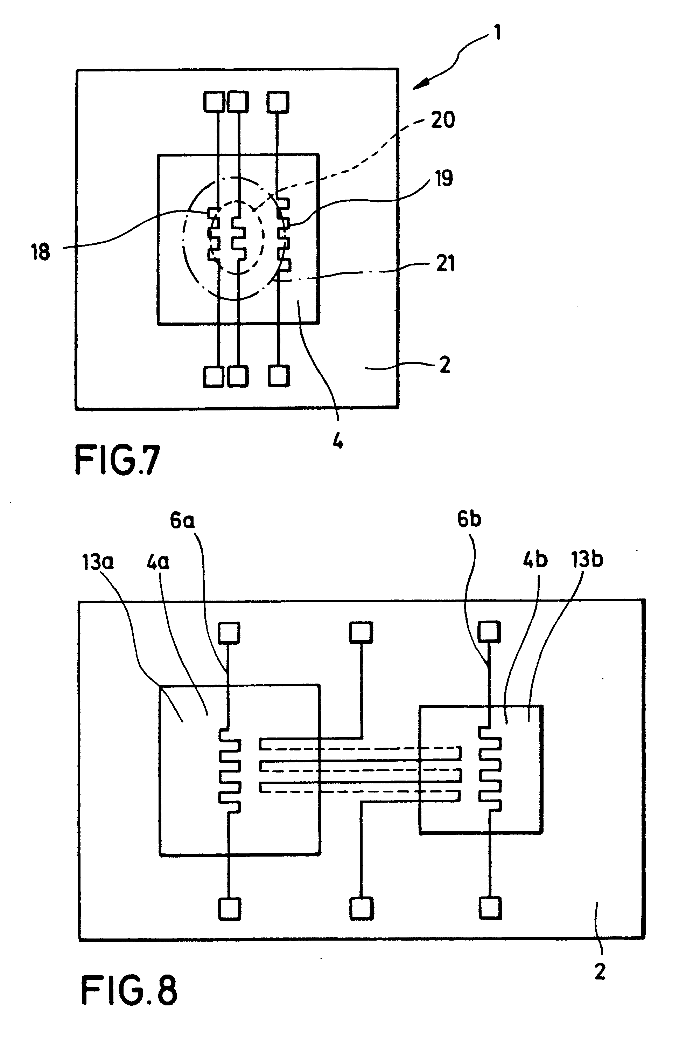

Bei der sechsten Ausführungsform des erfindungsgemäßen Gassensors 1 gemäß Fig. 7 wird die Temperaturdifferenz zwischen den Isothermen 20, 21 nicht mittels eines Thermoelementes 7 erfaßt, wie dies beim Ausführungsbeispiel gemäß Fig. 6 der Fall ist, sondern mittels zweier Meßwiderstände 18, 19. In Abweichung zu der Ausführungsform gemäß Fig. 6 ist der Heizwiderstand hier gestreckt und nicht abgewinkelt ausgeführt.

Die Ausführungsform gemäß Fig. 8 unterscheidet sich nur dadurch von der Ausführungsform gemäß Fig. 4, daß hier beide Membranen mit Oberflächenschichten 13a, 13b aus dem gleichen Katalysatormaterial überzogen sind. Hier werden die unterschiedlichen Empfindlichkeiten der Erfassungsbereiche also nicht durch unterschiedliche Katalysatormaterialen, sondern durch unterschiedliche Temperaturen der Membranen 4a, 4b realisiert, die durch entsprechende Heizleistungen der Heizwiderstände 6a, 6b festgelegt werden.

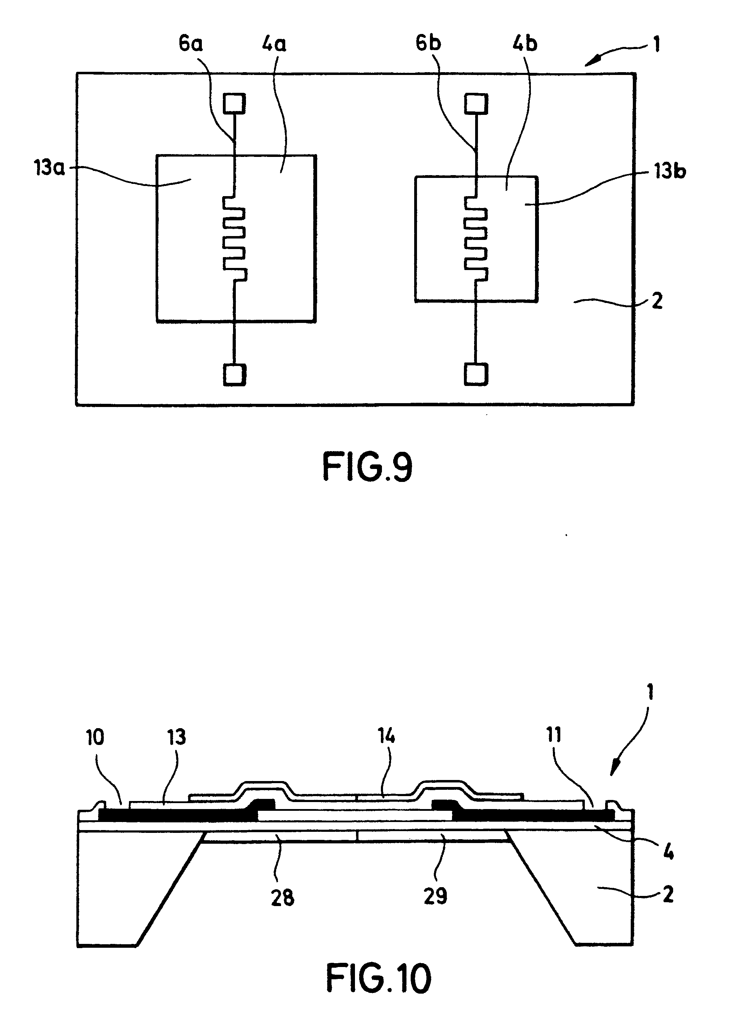

Bei der achten Ausführungsform des erfindungsgemäßen Gassensors 1, die in Fig. 9 wiedergegeben ist, dienen die beiden Widerstände 6a, 6b auf den beiden Mebranen 4a, 4b, die mit Oberflächenbeschichtungen 13a, 13b aus dem gleichen Katalysatormaterial überzogen sind, sowohl als Meßwiderstände wie auch als Heizwiderstände. Daher kann in Abweichung zu der Ausführungsform gemäß Fig. 8 bei dieser Ausführungsform das Thermoelement 7 entfallen. Auch hier werden die beiden Membranen 4a, 4b aufgrund entsprechend unterschiedlicher Heizleistungen der Widerstände 6a, 6b bei unterschiedlichen Temperaturen betrieben. In Übereinstimmung mit der Ausführungsform gemäß Fig. 8 kann die niedrigere Temperatur der rechtsseitig dargestellten zweiten Membran 4b gegenüber der linksseitig dargestellten ersten Membran 4a auch durch eine geringere Lateralabmessung der zweiten Membran 4b gegenüber derjenigen der ersten Membran 4a bei gleicher Heizleistung der beiden Widerstände 6a, 6b realisiert sein.

Wie bei der neunten Ausführungsform des erfindungsgemäßen Gassensors gemäß Fig. 10 verdeutlicht ist, kann eine erhöhte Emfindlichkeit des Gassensors dadurch bewirkt werden, daß dessen Membran 4 nicht nur auf der Vorderseite mit Oberflächenschichten 13, 14 aus einem ersten bzw. zweiten Katalysatormaterial versehen ist, sondern auch rückseitig mit Oberflächenschichten 28, 29 aus dem ersten und zweiten Katalysatormaterial in der Weise versehen ist, daß jeweils gleiche Katalysatormaterialien einander auf den beiden Seiten der Membran gegenüberliegen.

Für den Fachmann ist es offensichtlich, daß die beiseitige Beschichtung der Membran mit Katalysatormaterial auch bei den Ausführungsformen in Betracht kommt, die unter Bezugnahme auf die Fig. 3 bis 9 erläutert wurden.

In Abweichung zu den beschriebenen Ausführungsbeispielen kann eine unterschiedliche Empfindlichkeit zwischen den beiden Erfassungsbereichen auch dadurch bewerkstelligt werden, daß diese sowohl mit unterschiedlichen Katalysatormaterialien versehen sind wie auch mit unterschiedlichen Temperaturen betrieben werden.

Der erfindungsgemäße Gassensor kann somit als integrierter Chip hergestellt werden, der sich durch niedrige Herstellungskosten, einen geringen Leistungsbedarf in der Größenordnung von lediglich 20 bis 100 mW, hoher Sensorgenauigkeit, geringer Langzeitdrift und Referenzbildung ohne zusätzliche Herstellungsschritte bei hoher Miniaturisierbarkeit auszeichnet.

In weiterer Abweichung zu den beschriebenen Ausführungsbeispielen können auf den Membranen mehr als zwei unterschiedliche Oberflächenschichten aus unterschiedlichen Katalysatormaterialien vorgesehen sein. Dementsprechend können bei derartigen Ausführungsformen weitere Thermoelemente oder weitere Meßwiderstände auf den Membranen angeordnet sein.

Auf den Membranen können mehr als zwei Isothermen ausgenützt werden, wobei hier weitere Thermoelemente oder Meßwiderstände erforderlich sind.

Die Ausführungsformen gemäß den Fig. 4, 5, 8 und 9 können mit mehr als zwei Membranen realisiert sein, wobei hier eine entsprechend höhere Anzahl von Meßwiderständen oder Thermoelementen erforderlich ist.

Die Meßwiderstände können sowohl auf dem Siliziumsubstrat als auch außerhalb desselben zu Brücken verschaltet sein. Ein Einstellen der Widerstandswerte der Meßwiderstände kann durch Lasertrimmen der Widerstände auch auf dem Halbleitersubstrat erfolgen.

Der erfindungsgemäße Gassensor zeichnet sich ferner durch eine integrierte Herstellbarkeit des Sensorelementes und des Referenzelementes aus, worin er sich wesentlich vom Stand der Technik unterscheidet. Die Referenzbildung durch einfache Verwendung von Thermoelementen führt zu einer weiteren wesentlichen Vereinfachung der gesamten Struktur des Gassensors.

**Patentansprüche**

1. Katalytischer Gassensor (1) mit

   einer Heizvorrichtung (6, 6a, 6b),

   einer Temperatursensorvorrichtung (7; 18, 19) und

   einer katalytisch aktiven Oberflächenschicht (13, 14; 13a, 13b), an der das zu erfassende Gas exotherm katalytisch reagiert und zu einer von der Gaskonzentration abhängigen Temperaturerhöhung führt, die durch die Temperatursensorvorrichtung elektrisch erfaßbar ist,

   dadurch gekennzeichnet,

   daß der Gassensor (1) einen ersten und einen zweiten Erfassungsbereich (13, 14; 13a, 13b) mit einer ersten bzw. zweiten Empfindlichkeit hat,

   daß die Temperatursensorvorrichtung (7; 18, 19) sowohl auf dem ersten wie auch auf dem zweiten Erfassungsbereich angeordnet ist, und

   daß der erste und zweite Erfassungsbereich durch Oberflächenschichten (13, 14) gebildet sind, die ein erstes bzw. zweites Katalysatormaterial aufweisen oder daß der erste und zweite, jeweils eine katalytisch aktive Oberflächenschicht aufweisende Erfassungsbereich (20, 21) durch die Heizvorrichtung (6; 6a, 6b) auf unterschiedliche Temperaturen aufgeheizt werden.

2. Katalytischer Gassensor nach einem der Anspruch 1, dadurch gekennzeichnet,

   daß ein aus einem ätzbaren Material bestehender Trägerkörper (2), der eine Ausnehmung (3) aufweist, sowie eine die Ausnehmung (3) überspannende Membran (4) vorgesehen sind, und

daß die Heizvorrichtung (6; 6a, 6b) und die Temperatursensorvorrichtung (7; 18, 19) auf der Membran (4) angeordnet sind.

3. Katalytischer Gassensor nach Anspruch 2, dadurch gekennzeichnet,

daß der Trägerkörper (2) eine weitere Ausnehmung (3a, 3b) sowie eine die weitere Ausnehmung überspannende weitere Membran (4a, 4b) aufweist.

4. Katalytischer Gassensor nach Anspruch 2, dadurch gekennzeichnet,

daß die Membran (4) teilweise mit der Oberflächenschicht (13) aus dem ersten Katalysatormaterial und teilweise mit der Oberflächenschicht (14) aus dem zweiten Katalysatormaterial bedeckt ist.

5. Katalytischer Gassensor nach Anspruch 4, dadurch gekennzeichnet,

daß die Heizvorrichtung (6; 6a, 6b) durch einen einzigen, auf der Membran (4) angeordneten Heizwiderstand (6) gebildet ist.

6. Katalytischer Gassensor nach Anspruch 4 oder 5, dadurch gekennzeichnet,

daß die Temperatursensorvorrichtung durch ein sich über die Oberflächenschicht (13) aus dem ersten Katalysatormaterial und über die Oberflächenschicht (14) aus dem zweiten Katalysatormaterial erstreckendes Thermoelement (7) gebildet ist.

7. Katalytischer Gassensor nach Anspruch 6, dadurch gekennzeichnet,

daß das Thermoelement (7) durch eine Reihenschaltung von wenigstens einem Thermoelementteilstück (8) aus einem ersten Thermoelementmaterial und wenigstens einem Thermoelementteilstück (9) aus einem zweiten Thermoelementmaterial gebildet ist, und

daß sich die Thermoelementteilstücke (8, 9) von der Oberflächenschicht (13) aus dem ersten Katalysatormaterial zu derjenigen (14) aus dem zweiten Katalysatormaterial erstrecken.

8. Katalytischer Gassensor nach Anspruch 7, dadurch gekennzeichnet,

daß das erste Thermoelementmaterial Chrom oder Polysilizium und

daß das zweite Thermoelementmaterial Aluminium oder Gold aufweist.

9. Katalytischer Gassensor nach Anspruch 4 oder 5, dadurch gekennzeichnet,

daß die Temperatursensorvorrichtung durch wenigstens zwei Meßwiderstände (18, 19) gebildet ist.

10. Katalytischer Gassensor nach Anspruch 9, dadurch gekennzeichnet,

daß jeder Meßwiderstand gleichfalls als Heizwiderstand (6a, 6b) betrieben wird, wobei die Heizwiderstände (6a, 6b) die Heizvorrichtung bilden.

11. Katalytischer Gassensor nach Anspruch 3, dadurch gekennzeichnet,

daß jeder Membran (4a, 4b) ein eigener Heizwiderstand (6a, 6b) zugeordnet ist.

12. Katalytischer Gassensor nach Anspruch 11, dadurch gekennzeichnet,

daß auf jeder Membran (6a, 6b) ein Meßwiderstand (18, 19) angeordnet ist, und

daß die Meßwiderstände (18, 19) die Temperatursensorvorrichtung bilden.

13. Katalytischer Gassensor nach Anspruch 11, dadurch gekennzeichnet,

daß jeder Heizwiderstand gleichfalls als Meßwiderstand betrieben wird.

14. Katalytischer Gassensor nach Anspruch 11, dadurch gekennzeichnet,

daß die Temperatursensorvorrichtung durch ein sich von der einen zu der anderen Membran (4a, 4b) erstreckendes Thermoelement (7) gebildet ist.

15. Katalytischer Gassensor nach einem der Ansprüche 11 bis 14, dadurch gekennzeichnet,

daß die Membranen (4a, 4b) mit Oberflächenschichten (13, 14) aus dem ersten und dem zweiten Katalysatormaterial versehen sind.

16. Katalytischer Gassensor nach einem der Ansprüche 11 bis 15, dadurch gekennzeichnet,

daß die Membranen (4a, 4b) durch die Heizvorrichtung (6; 6a, 6b) bei unterschiedlichen Temperaturen betrieben werden.

17. Katalytischer Gassensor nach Anspruch 4, dadurch gekennzeichnet,

daß auf der Membran (4) ein einziger Heizwiderstand (6) angeordnet ist, durch den Meßbereiche (20, 21) mit unterschiedlichen Temperaturen festgelegt werden.

18. Katalytischer Gassensor nach Anspruch 17, dadurch gekennzeichnet,

daß ein erster Meßwiderstand (18) auf dem Membranbereich (20) mit der höheren Temperatur und ein zweiter Meßwiderstand (19) auf dem Membranbereich (21) mit der niedrigeren Temperatur angeordnet ist.

19. Katalytischer Gassensor nach Anspruch 17, dadurch gekennzeichnet,

daß sich ein Thermoelement (7) von dem Membranbereich (21) mit der niedrigeren Temperatur zu demjenigen (20) mit der höheren Temperatur erstreckt.

20. Katalytischer Gassensor nach Anspruch 2, dadurch gekennzeichnet,

daß die Membran sowohl an ihrer Vorderseite wie auch an ihrer Rückseite mit katalytischen Materialien beschichtet ist.

21. Katalytischer Gassensor nach Anspruch 2, dadurch gekennzeichnet,

daß der Trägerkörper (2) aus Silizium besteht,

daß die Membran (4) durch eine Nitridschicht (5) gebildet ist,

daß der Heizwiderstand (6) und die Temperatursensorvorrichtung (7) auf der Nitridschicht (5) in Dünnfilmtechnik ausgebildet sind und von einer Passivierungsschicht (12) bedeckt sind, und

daß die Passivierungsschicht (12) jeweils anteilig von einer ersten und einer zweiten Katalysatorschicht abgedeckt ist.

EP 0 446 483 A2

FIG.1

FIG.2

FIG.3

FIG.4

FIG.5

FIG.6

FIG.7

FIG.8

FIG.9

FIG.10